# EUROPÄISCHE PATENTANMELDUNG

(11) **EP 3 838 467 A1**
(43) Veröffentlichungstag der Anmeldung: **23.06.2021**
(21) Anmeldenummer: 19218010.7
(22) Anmeldetag: 19.12.2019
(51) Int. Cl.: B23K 9/20, B23K 9/095

(54) **SCHWEISSVORRICHTUNG UND -VERFAHREN**

(71) Anmelder: Hilti Aktiengesellschaft, 9494 Schaan (LI)
(72) Erfinder: Starzengruber, Andreas, 4654 Bad-Wimsbach-N. (AT); Dörner, Philip, 4600 Thalheim (AT); Speigner, Alexander, 4551 Ried im Traunkreis (AT)
(74) Vertreter: Hilti Aktiengesellschaft Corporate Intellectual Property

(57) **Zusammenfassung**

Vorrichtung und Verfahren zum Schweissen eines Schweissbolzens an einen Untergrund. Ein Schweissbolzen wird mit einem Schweissstrom zwischen dem Schweissbolzen und dem Untergrund beaufschlagt, wodurch ein Material des Schweissbolzens und des Untergrunds teilweise verflüssigt wird. Danach wird der Schweissbolzen in das erstarrende Material des Schweissbolzens beziehungsweise des Untergrunds eingetaucht, um eine stoffschlüssige Verbindung zwischen dem Schweissbolzen und dem Untergrund zu schaffen.

## Beschreibung

### Technisches Gebiet

Die Erfindung betrifft allgemein eine Vorrichtung und ein Verfahren zur Befestigung eines Bolzens an einem Untergrund sowie einen derartigen Bolzen.

### Stand der Technik

Es sind etliche Vorrichtungen und Verfahren bekannt, mit denen verschiedene Bolzen in unterschiedlichen Anwendungsfällen an einem Untergrund befestigt werden. Beispielsweise wird ein Bolzen mit dem Untergrund in Kontakt gebracht und mit elektrischem Strom beaufschlagt. Sobald der elektrische Strom zwischen dem Bolzen und dem Untergrund fliesst, wird der Bolzen unter Ausbildung eines Lichtbogens von dem Untergrund abgehoben. Aufgrund der freiwerdenden Energie verflüssigt sich teilweise das Material des Bolzens und des Untergrunds. Anschliessend wird der Bolzen in das verflüssigte Material eingetaucht, bevor dieses Material erkaltet und fest wird. Der Bolzen ist schliesslich stoffschlüssig mit dem Untergrund verbunden.

Um die notwendige Energie für die Verflüssigung des Materials des Bolzens und des Untergrunds in ausreichend kurzer Zeit zur Verfügung zu stellen, sind Vorrichtungen bekannt, welche einen elektrischen Strom mit sehr hoher Stromstärke erzeugen und über ein entsprechend dimensioniertes elektrisches Kabel dem Bolzen zuführen. Um ein Oxidieren des verflüssigten Materials zu vermeiden, ist es bekannt, die Kontaktstelle zwischen dem Bolzen und dem Untergrund mit einem Inertgas zu spülen.

Bei Anwendungen beispielsweise im Gebäude- oder Schiffsbau werden Bolzen in verschiedenen Grössen mit einem Gewinde verwendet, an welches ein Gegenstand geschraubt wird, um den Gegenstand an dem Untergrund zu befestigen. Einige Parameter des Befestigungsverfahrens wie beispielsweise die Dauer und die elektrische Leistung des elektrischen Stroms sind von einem Anwender an der Vorrichtung einzustellen und an den verwendeten Bolzen anzupassen. Mittels einer Sichtprüfung beurteilt der Anwender schliesslich die Qualität der Verbindung zwischen dem Bolzen und dem Untergrund. Die Verbindungsqualität hängt damit auch von der Erfahrung und den Fähigkeiten des Anwenders ab.

### Darstellung der Erfindung

Aufgabe der Erfindung ist es, eine Vorrichtung und/oder ein Verfahren zur Verfügung zu stellen, mit welchem eine Befestigung eines Bolzens an einem Untergrund vereinfacht und/oder verbessert wird.

Die Aufgabe ist gelöst bei einer Vorrichtung zum Schweissen eines Schweissbolzens an einen Untergrund, umfassend einen Bolzenhalter, ein Schweissstrom-Kontaktelement zur Beaufschlagung des Schweissbolzens mit einem Schweissstrom, um ein Material des Schweissbolzens und/oder des Untergrunds teilweise zu verflüssigen, eine eine Spule umfassende Bolzentransporteinrichtung und eine Bestimmungseinrichtung zur Bestimmung einer zeitlichen Dauer und/oder Geschwindigkeit einer Bewegung, beispielsweise Abhub- oder Eintauchbewegung, des Schweissbolzens und/oder einer Position des Schweissbolzens insbesondere vor, während oder nach der Abhub- und/oder Eintauchbewegung, wobei die Bestimmungseinrichtung eine Erfassungseinrichtung zur Erfassung einer Induktivität der Spule oder einer die Induktivität der Spule repräsentierenden Grösse umfasst. Bevorzugt umfasst die Vorrichtung darüber hinaus eine Bolzenabhubeinrichtung zum Abheben des Schweissbolzens von dem Untergrund unter Beibehaltung des zwischen dem Schweissbolzen und dem Untergrund fliessenden Schweissstroms, besonders bevorzugt unter Ausbildung eines Lichtbogens zwischen dem Schweissbolzen und dem Untergrund. Ebenfalls bevorzugt umfasst der Bolzenhalter das Schweissstrom-Kontaktelement.

Eine weitere vorteilhafte Ausgestaltung besteht darin, dass die Bolzentransporteinrichtung einen die Spule aufweisenden Hubmagneten umfasst, welcher den Schweissbolzen mittels eines von der Spule erzeugten Magnetfelds zur Ausführung einer Abhubbewegung von dem Untergrund weg und/oder einer Eintauchbewegung auf den Untergrund zu antreibt. Eine weitere vorteilhafte Ausgestaltung besteht darin, dass die Bolzentransporteinrichtung als Bolzenabhubeinrichtung und/oder als Bolzeneintaucheinrichtung ausgebildet ist.

Eine weitere vorteilhafte Ausgestaltung besteht darin, dass die Vorrichtung eine Steuereinrichtung umfasst, welche bevorzugt die Bestimmungseinrichtung aufweist. Bevorzugt ist die Steuereinrichtung vorgesehen zum Steuern der Bolzentransporteinrichtung in Abhängigkeit von einer von der Erfassungseinrichtung erfassten Induktivität oder die Induktivität repräsentierenden Grösse. Ebenfalls bevorzugt ist die Steuereinrichtung vorgesehen zum Steuern eines oder mehrerer Parameter des Schweissvorgangs in Abhängigkeit von den erfassten Grössen. Besonders bevorzugt ist die Steuereinrichtung vorgesehen zum Steuern einer elektrischen Spannung und/oder einer Stromstärke des Schweissstroms, und/oder einer Geschwindigkeit und/oder einer Position und/oder einer Bewegungsrichtung des Schweissbolzens. Eine vorteilhafte Ausgestaltung besteht darin, dass die Steuereinrichtung zum Steuern eines oder mehrerer Parameter eines nachfolgenden Schweissvorgangs in Abhängigkeit von den von der Erfassungseinrichtung während eines vorangegangenen Schweissvorgangs erfassten Grössen geeignet ist. Dadurch ist unter Umständen eine Kompensation der festgestellten Veränderungen von Parametern des Schweissvorgangs möglich. Dadurch ist unter Umständen eine objektive Beurteilung der Qualität der Schweissverbindung zwischen dem Schweissbolzen und dem Untergrund ermöglicht. Eine weitere vorteilhafte Ausgestaltung besteht darin, dass die Vorrichtung einen Datenspeicher umfasst, in welchem ein Sollwert für die Induktivität der Spule oder der die Induktivität der Spule repräsentierenden Grösse abgelegt ist, wobei die Steuereinrichtung dazu geeignet ist, eine von der Erfassungseinrichtung erfasste Grösse mit dem Sollwert zu vergleichen. Bevorzugt ist die Steuereinrichtung dazu geeignet, eine Differenz aus der von der Erfassungseinrichtung erfassten Grösse und dem Sollwert zu bilden.

Eine weitere vorteilhafte Ausgestaltung besteht darin, dass die Vorrichtung eine Ausgabeeinrichtung zur Ausgabe von Informationen über die bestimmten Grössen und/oder von aus den bestimmten Grössen abgeleiteten Informationen umfasst. Bevorzugt umfasst die Ausgabeeinrichtung eine visuelle Anzeige und/oder eine drahtlose Übertragungseinrichtung. Bevorzugt umfassen die von der Ausgabeeinrichtung ausgebbaren Informationen Informationen über eine Güte des Schweissvorgangs und/oder über Massnahmen zur Verbesserung des Schweissvorgangs.

Die Aufgabe ist ebenfalls gelöst bei einem Verfahren zum Schweissen eines Schweissbolzens an einen Untergrund, bei dem ein Schweissbolzen zur Verfügung gestellt und mit einem Schweissstrom zwischen dem Schweissbolzen und dem Untergrund beaufschlagt wird, ein Material des Schweissbolzens und/oder des Untergrunds teilweise verflüssigt und erstarren gelassen wird, der Schweissbolzen vor dem Erstarren in das verflüssigte Material des Schweissbolzens beziehungsweise des Untergrunds mit Hilfe einer eine Spule umfassenden Bolzentransporteinrichtung eingetaucht wird, und eine oder mehrere die von der Bolzentransporteinrichtung bewirkte Eintauchbewegung des Schweissbolzens in das verflüssigte Material des Schweissbolzens und/oder des Untergrundes kennzeichnende Grössen bestimmt werden, wobei eine Induktivität der Spule oder eine die Induktivität der Spule repräsentierende Grösse erfasst wird. Bevorzugt wird der Schweissbolzen von dem Untergrund unter Beibehaltung des zwischen dem Schweissbolzen und dem Untergrund fliessenden Schweissstroms abgehoben, besonders bevorzugt unter Ausbildung eines Lichtbogens zwischen dem Schweissbolzen und dem Untergrund. Ebenfalls bevorzugt umfasst die Bolzentransporteinrichtung einen die Spule umfassenden Hubmagneten, wobei der Schweissbolzen mittels eines von der Spule erzeugten Magnetfelds zur Ausführung einer Abhubbewegung von dem Untergrund weg und/oder einer Eintauchbewegung auf den Untergrund zu angetrieben wird.

Eine vorteilhafte Ausgestaltung des Verfahrens besteht darin, dass eine von der Erfassungseinrichtung erfasste Grösse mit einem Sollwert für die Induktivität der Spule oder der die Induktivität der Spule repräsentierenden Grösse verglichen wird. Bevorzugt wird eine Differenz aus der Induktivität der Spule oder der die Induktivität der Spule repräsentierenden Grösse und dem Sollwert gebildet wird.

Eine weitere vorteilhafte Ausgestaltung des Verfahrens besteht darin, dass die Bolzentransporteinrichtung in Abhängigkeit von einer von der Erfassungseinrichtung erfassten Induktivität oder die Induktivität repräsentierenden Grösse gesteuert wird.

Eine ebenfalls vorteilhafte Ausgestaltung des Verfahrens besteht darin, dass ein oder mehrere Parameter des Schweissvorgangs in Abhängigkeit von den erfassten Grössen gesteuert werden. Bevorzugt wird eine elektrische Spannung und/oder eine Stromstärke des Schweissstroms, und/oder eine Geschwindigkeit und/oder eine Position und/oder eine Bewegungsrichtung des Schweissbolzens gesteuert.

Eine weitere vorteilhafte Ausgestaltung besteht darin, dass ein oder mehrere Parameter eines nachfolgenden Schweissvorgangs in Abhängigkeit von den während eines vorangegangenen Schweissvorgangs erfassten Grössen gesteuert werden.

Eine weitere vorteilhafte Ausgestaltung besteht darin, dass Informationen über die bestimmten Grössen und/oder aus den bestimmten Grössen abgeleitete Informationen ausgegeben werden. Bevorzugt handelt es sich bei diesen Informationen um Informationen über eine Güte des Schweissvorgangs und/oder über Massnahmen zur Verbesserung des Schweissvorgangs.

### Ausführungsbeispiele

Die Erfindung wird nachstehend anhand von Ausführungsbeispielen unter Bezugnahme auf die Zeichnungen näher erläutert. Es zeigen:
- Fig. 1: schematisch eine Schweissvorrichtung,
- Fig. 2: schematisch eine Schweisspistole,
- Fig. 3: einen Untergrund,
- Fig. 4: eine Schweisspistole und
- Fig. 5: ein Ablaufschema eines Schweissverfahrens.

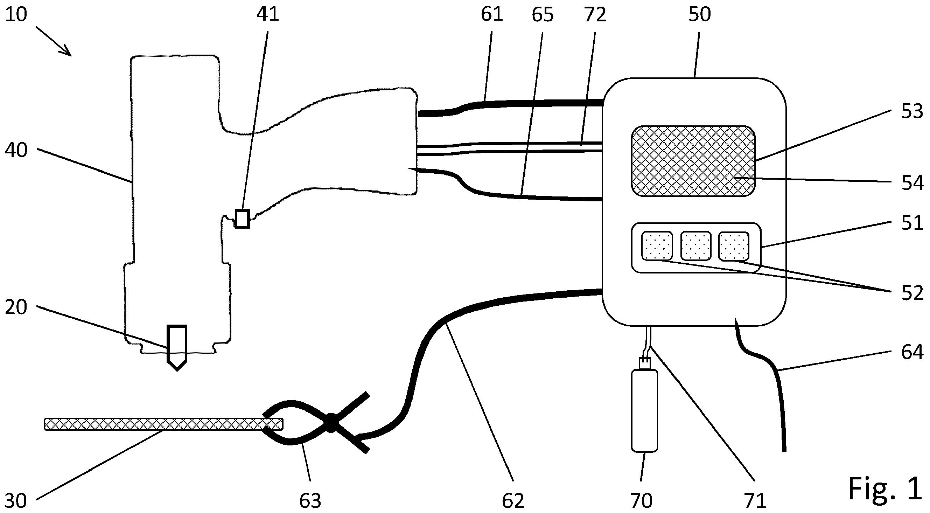

In Fig. 1 ist eine Schweissvorrichtung 10 zum Schweissen eines Schweissbolzens 20 an einen Untergrund 30 schematisch dargestellt. Ein Material des Schweissbolzens 20 und ein Material des Untergrunds 30 sind elektrisch leitfähig, insbesondere metallisch. Die Schweissvorrichtung 10 umfasst eine Schweisspistole 40 mit einem als Tastschalter ausgebildeten Auslöseschalter 41, ein Schweissgerät 50, ein erstes elektrisches Kabel 61, ein zweites elektrisches Kabel 62 mit einer Anschlussklemme 63, ein beispielsweise als Netzkabel ausgebildetes elektrisches Versorgungskabel 64, eine elektrische Kommunikationsleitung 65, ein als Gasflasche ausgebildetes Gasreservoir 70, eine schlauchförmige Gasversorgungsleitung 71 und einen Gasschlauch 72.

Das erste Kabel 61 dient einer Versorgung des Schweissbolzens 20 mit elektrischem Strom durch das Schweissgerät 50. Das zweite Kabel 62 dient einer elektrischen Verbindung des Untergrunds 30 mit dem Schweissgerät 50, wenn die Anschlussklemme 63 an den Untergrund 30 geklemmt ist. Bei Berührung des Schweissbolzens 20 mit dem Untergrund 30 schliesst sich ein Stromkreis, so dass der Schweissbolzen 20 von dem Schweissgerät 50 mit Schweissstrom beaufschlagbar ist, welcher beispielsweise als Gleichstrom oder Wechselstrom ausgebildet ist. Die Schweisspistole 40 umfasst zu diesem Zweck ein in Fig. 1 nicht gezeigtes Schweissstrom-Kontaktelement. Das Schweissgerät 50 umfasst eine nicht gezeigte Einrichtung zur Konvertierung von elektrischem Strom aus dem Versorgungskabel 64 in Schweissstrom, welche beispielsweise einen elektrischen Kondensator, einen Thyristor, einen Bipolar-Transistor mit isolierter Gate-Elektrode oder andere leistungselektronische Bauelemente sowie ein zugehöriges Steuergerät mit einem Mikroprozessor umfasst, um den Schweissstrom mit gewünschter Spannung und Stromstärke bereitzustellen.

Die Gasversorgungsleitung 71 und der Gasschlauch 72 dienen einer Versorgung eines Kontaktbereichs zwischen dem Schweissbolzen 20 und dem Untergrund 30 mit einem Schutzgas aus dem Gasreservoir 70, um den Kontaktbereich während eines Schweissvorgangs vor einer Oxidation durch Sauerstoff einer Umgebung zu schützen. Zur Steuerung eines Gasflusses zu dem Kontaktbereich umfasst das Gasreservoir 70, die Gasversorgungsleitung 71, das Schweissgerät 50, der Gasschlauch 72 oder die Schweisspistole 40 ein nicht gezeigtes, insbesondere regelbares Ventil auf.

Das Schweissgerät 50 weist eine Eingabeeinrichtung 51 mit Betätigungselementen 52 sowie eine Ausgabeeinrichtung 53 mit einem visuellen Anzeigeelement 54 und einer drahtlosen Übertragungseinheit auf. Die Eingabeeinrichtung 51 dient der Eingabe von Parametern eines mit der Schweissvorrichtung 10 durchzuführenden Schweissverfahrens, wie beispielsweise der elektrischen Spannung, Stromstärke, Leistung und zeitliche Dauer des Schweissstroms, Position und Geschwindigkeit des Bolzens und so weiter, durch einen Anwender der Schweissvorrichtung 10. Die Ausgabeeinrichtung 53 dient der Ausgabe von Informationen, wie beispielsweise Informationen über Parameter des Schweissverfahrens, Informationen über erfasste Emissionen des Schweissverfahrens oder andere Grössen, Informationen über eine Güte des Schweissvorgangs, Informationen über Massnahmen zur Verbesserung des Schweissvorgangs, Informationen über erfasste Eigenschaften des Schweissbolzens oder aus den vorgenannten Grössen abgeleitete Informationen, und/oder Empfehlungen oder Anweisungen zur Reinigung und/oder Wartung der Schweissvorrichtung 10, insbesondere der Schweisspistole 40, an den Anwender.

Die Kommunikationsleitung 65 dient einer Kommunikation zwischen der Schweisspistole 40, insbesondere einer in Fig. 1 nicht gezeigten Steuereinrichtung der Schweisspistole 40, und dem Schweissgerät 50, insbesondere dem Steuergerät und/oder der Eingabeeinrichtung 51 und/oder der Ausgabeeinrichtung 53. Durch diese Kommunikation wird beispielsweise ein Austausch von Informationen über die Parameter eines Schweissvorgangs bewerkstelligt, um beispielsweise eine Synchronisation des Schweissstroms mit einer Bewegung des Schweissbolzens 20 zu erreichen oder zu erleichtern. Bei nicht gezeigten Ausführungsbeispielen geschieht die Kommunikation zwischen der Schweisspistole und dem Schweissgerät drahtlos, per Funk oder mittels des ersten elektrischen Kabels, welches den Schweissstrom führt.

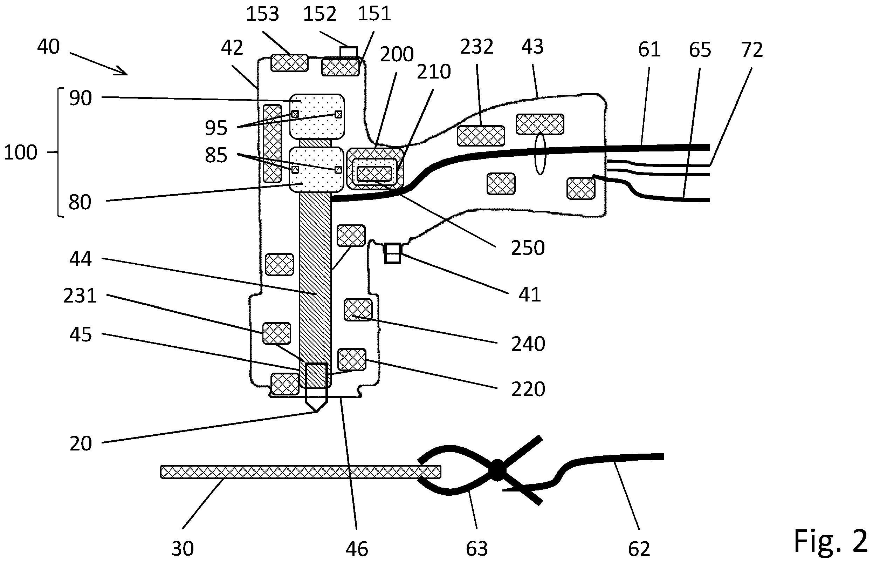

In Fig. 2 ist die Schweisspistole 40 mit dem Schweissbolzen 20 zur Befestigung an dem Untergrund 30 detaillierter dargestellt. Die Schweisspistole 40 weist ein Gehäuse 42 mit einer Mündung 46 auf, von welchem ein Handgriff 43 mit dem Auslöseschalter 41 abragt. Ebenfalls dargestellt sind das erste elektrische Kabel 61, das zweite elektrische Kabel 62 mit der an den Untergrund 30 geklemmten Anschlussklemme 63, die elektrische Kommunikationsleitung 65 und der Gasschlauch 72. Die Schweisspistole 40 weist ferner einen Bolzenhalter 44 auf, an welchem der Schweissbolzen 20 während eines Schweissvorgangs gehalten ist. Hierzu umfasst der Bolzenhalter beispielsweise zwei, drei, vier oder mehr nicht im einzelnen gezeigte federnde Arme, zwischen die der Schweissbolzen 20 eingesteckt und mittels Klemmsitz gehalten wird. Die Schweisspistole 40 weist ferner ein Schweissstrom-Kontaktelement 45 zur Beaufschlagung des Schweissbolzens 20 mit einem Schweissstrom auf, welches in den Bolzenhalter 44 integriert ist, beispielsweise in Form eines oder mehrerer der federnden Arme.

Die Schweisspistole 40 weist ferner eine Steuereinrichtung 200 zum Steuern der verschiedenen Komponenten und Einrichtungen der Schweisspistole und des Schweissgeräts 50 auf. Die Steuereinrichtung 200 ist zum Steuern eines oder mehrerer Parameter des Schweissvorgangs vorgesehen. Die Steuereinrichtung 200 umfasst dazu verschiedene elektronische Bauteile, wie beispielsweise einen oder mehrere Mikroprozessoren, einen oder mehrere temporäre oder dauerhafte Datenspeicher und dergleichen.

Die Schweisspistole 40 umfasst ferner eine Bolzentransporteinrichtung 100, welche eine als ein erster Hubmagnet ausgebildete Bolzenabhubeinrichtung 80 und eine als zweiter Hubmagnet ausgebildete Bolzeneintaucheinrichtung 90 aufweist. Die Bolzenabhubeinrichtung 80 weist eine erste Spule 85 auf und beaufschlagt den Bolzenhalter 44 mit einer Kraft von der Mündung 46 weg nach hinten (in Fig. 2 nach oben), wenn die Bolzenabhubeinrichtung 80 aktiviert ist, indem die erste Spule 85 bestromt wird und mittels eines Magnetfelds beispielsweise eine Reluktanzkraft auf ein weichmagnetisches Material des Bolzenhalters 44 ausübt. Der Bolzenhalter 44 weist zu diesem Zweck beispielsweise einen nicht gezeigten ersten Eisen- oder Stahlring an seinem äusseren Umfang auf. Über eine nicht gezeigte Signalleitung kommuniziert die Steuereinrichtung 200 mit der Bolzenabhubeinrichtung 80, um die Bolzenabhubeinrichtung 80 zu steuern, insbesondere zu aktivieren und zu deaktivieren.

Die Bolzeneintaucheinrichtung 90 weist eine zweite Spule 95 auf und beaufschlagt den Bolzenhalter 44 mit einer Kraft zu der Mündung 46 hin nach vorne (in Fig. 2 nach unten), wenn die Bolzeneintaucheinrichtung 90 aktiviert ist, indem die zweite Spule 95 bestromt wird und mittels eines Magnetfelds beispielsweise eine Reluktanzkraft auf ein weichmagnetisches Material des Bolzenhalters 44 ausübt. Der Bolzenhalter 44 weist zu diesem Zweck beispielsweise einen nicht gezeigten zweiten Eisen- oder Stahlring an seinem äusseren Umfang auf. Über eine nicht gezeigte Signalleitung kommuniziert die Steuereinrichtung 200 mit der Bolzeneintaucheinrichtung 90, um die Bolzeneintaucheinrichtung 90 zu steuern, insbesondere zu aktivieren und zu deaktivieren. Bei einem nicht gezeigten Ausführungsbeispiel ist die Bolzeneintaucheinrichtung als ein Federelement ausgebildet, welches gespannt wird, wenn der Bolzenhalter von der Bolzenabhubeinrichtung nach hinten bewegt wird, und welches den Bolzenhalter nach vorne bewegt, sobald die Bolzenabhubeinrichtung deaktiviert wird.

Die Schweisspistole 40 weist ferner eine Identifikationseinrichtung 220 zur Erfassung einer oder mehrerer Bolzeneigenschaften des Schweissbolzens 20 auf. Über eine nicht gezeigte Signalleitung kommuniziert die Steuereinrichtung 200 mit der Identifikationseinrichtung, um Signale, welche die erfassten Bolzeneigenschaften repräsentieren, zu empfangen und die Steuerung des Schweissvorgangs entsprechend vorzunehmen. Bei einem nicht gezeigten Ausführungsbeispiel ist das Identifikationselement an einer Verpackung des Schweissbolzens angebracht und wird beispielsweise per QR-Code oder RFID eingelesen, insbesondere mit Hilfe eines Mobiltelefons oder ähnlichem Gerät.

Die Schweisspistole 40 umfasst ferner eine Spannungserfassungseinrichtung 231 zur Erfassung einer zwischen dem Schweissbolzen 20 und dem Untergrund 30 anliegenden elektrischen Spannung während des Schweissvorgangs und eine Stromstärkeerfassungseinrichtung 232 zur Erfassung einer zwischen dem Schweissbolzen 20 und dem Untergrund 30 fliessenden Stromstärke während des Schweissvorgangs. Die Spannungserfassungseinrichtung 231 umfasst dafür vorzugsweise einen beispielsweise an der Mündung 46 angebrachten Messkontakt zum Abgreifen des elektrischen Potentials des Untergrunds 30. Über eine nicht gezeigte Signalleitung kommuniziert die Steuereinrichtung 200 mit der Spannungserfassungseinrichtung 231 und der Stromstärkeerfassungseinrichtung 232, um Signale, welche die elektrische Spannung beziehungsweise die Stromstärke repräsentieren, zu empfangen, in einem ihrer Datenspeicher zu speichern, und einen oder mehrere Parameter eines nachfolgenden Schweissvorgangs in Abhängigkeit von den von den Erfassungseinrichtungen 231, 232 während eines vorangegangenen Schweissvorgangs erfassten Parametern zu steuern.

Die Schweisspistole 40, insbesondere die Steuereinrichtung 200, umfasst eine Bestimmungseinrichtung 210 zur Bestimmung einer zeitlichen Dauer und/oder Geschwindigkeit einer Bewegung, beispielsweise Abhub- oder Eintauchbewegung, des Schweissbolzens und/oder einer Position des Schweissbolzens vor, während oder nach der Abhub- und/oder Eintauchbewegung. Die Bestimmungseinrichtung 210 umfasst ihrerseits eine Erfassungseinrichtung 250 zur Erfassung einer Induktivität der ersten Spule 85 und/oder der zweiten Spule 95 oder einer Grösse, welche eine Induktivität der ersten Spule 85 und/oder der zweiten Spule 95 repräsentiert. Da die Induktivität der ersten Spule 85 und der zweiten Spule 95 von einer Position des Bolzenhalters 44 und damit des Schweissbolzens 20 beeinflusst wird, ist ein Rückschluss von der erfassten Induktivität auf die Position des Schweissbolzens 20 möglich. Zur Erfassung der Induktivität der Spule 85, 95 beaufschlagt die Erfassungseinrichtung 250 die Spule 85, 95 mit einem elektrischen Strom, welcher nach einer vorbestimmten Dauer, um einen eingeschwungenen Zustand abzuwarten, wieder abgeschaltet wird, wodurch eine Freilaufphase beginnt, in welcher der elektrische Strom bis zum Unterschreiten eines Referenzwerts abnimmt. Eine zeitliche Dauer der Freilaufphase ist proportional zur Induktivität der Spule 85, 95 und stellt somit einen die Induktivität repräsentierende Grösse dar. Zur Bestimmung der Position des Schweissbolzens 20 greift die Bestimmungseinrichtung 210 auf gespeicherte Werte zurück, welche bei einer oder mehreren Kalibrierpositionen des Schweissbolzens 20 erfasst werden. Als mögliche Kalibrierpositionen dienen beispielsweise eine Position des Schweissbolzens 20 vor einem Aufsetzen auf dem Untergrund, nach dem Aufsetzen und vor dem Schweissvorgang, nach dem Schweissvorgang und dergleichen.

Die Steuereinrichtung 200 eignet sich dazu, einen Unterschied zwischen den beiden von der Bestimmungseinrichtung 210 bestimmten Positionen des Schweissbolzens 20 vor der Abhubbewegung beziehungsweise nach der Eintauchbewegung abzuleiten und damit die Qualität der Schweissverbindung zwischen dem Schweissbolzen 20 und dem Untergrund 30 zu beurteilen. Darüber hinaus eignet sich die Steuereinrichtung 200 dazu, die Bolzentransporteinrichtung 100 und/oder eines oder mehrerer Parameter des Schweissvorgangs, wie beispielsweise einer elektrischen Spannung und/oder einer Stromstärke des Schweissstroms, und/oder einer Geschwindigkeit und/oder einer Position und/oder einer Bewegungsrichtung des Schweissbolzens 20, in Abhängigkeit von einer von der Bestimmungseinrichtung 210 bestimmten Grösse und damit in Abhängigkeit von einer von der Erfassungseinrichtung 250 erfassten Induktivität oder die Induktivität repräsentierenden Grösse zu steuern. Vorzugsweise eignet sich die Steuereinrichtung 200 zum Steuern eines oder mehrerer Parameter eines nachfolgenden Schweissvorgangs in Abhängigkeit von den während eines vorangegangenen Schweissvorgangs von der Bestimmungseinrichtung 210 bestimmten und/oder von der Erfassungseinrichtung 250 erfassten Grössen geeignet ist. Dies ermöglicht eine Kompensation der festgestellten Veränderungen von Parametern des Schweissvorgangs sowie eine objektive Beurteilung der Qualität der Schweissverbindung zwischen dem Schweissbolzen und dem Untergrund. In einem Datenspeicher der Steuereinrichtung 200 ist ein Sollwert für die Induktivität der Spulen 85, 95 oder der die Induktivität der Spulen 85, 95 repräsentierenden Grössen abgelegt. Die Steuereinrichtung 200 ist dazu geeignet, eine von der Erfassungseinrichtung 250 erfasste Grösse mit dem Sollwert zu vergleichen und eine Differenz aus der von der Erfassungseinrichtung 250 erfassten Grösse und dem Sollwert zu bilden und in nachfolgenden Schweissvorgängen zu kompensieren.

Die Schweisspistole 40 weist ferner eine Eingabeeinrichtung 151 mit einem Betätigungselement 152 sowie eine Ausgabeeinrichtung 153 mit einem visuellen Anzeigeelement und einer drahtlosen Übertragungseinheit auf. Über nicht gezeigte Signalleitungen kommuniziert die Steuereinrichtung 200 mit der Eingabeeinrichtung 151 und der Ausgabeeinrichtung 153, um Informationen, welche mittels der Eingabeeinrichtung 151 eingegeben werden, zu empfangen, beziehungsweise Informationen, welche ausgegeben werden sollen, an die Ausgabeeinrichtung 153 zu senden.

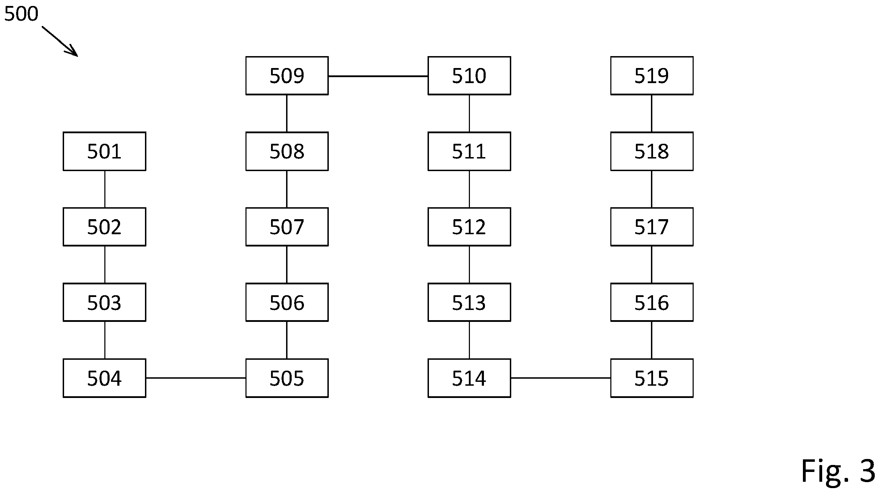

Fig. 3 zeigt schematisch ein Verfahren 500 zum Schweissen eines Schweissbolzens an einen Untergrund, beispielsweise des Schweissbolzens 20 an den Untergrund 30. In einem ersten Schritt 501 wird der Untergrund zur Verfügung gestellt. In einem weiteren Schritt 502 wird eine Schweissvorrichtung mit einer Steuereinrichtung zur Verfügung gestellt. In einem weiteren Schritt 503 wird ein Schweissbolzen zur Verfügung gestellt.

In einem weiteren Schritt 504 werden von einem Anwender über eine Eingabeeinrichtung Informationen eingegeben, beispielsweise über gewünschte Parameter des folgenden Schweissvorgangs. In einem weiteren Schritt 505 werden mittels einer Identifikationseinrichtung eine oder mehrere Bolzeneigenschaften des Schweissbolzens erfasst. In einem weiteren Schritt 506 werden Informationen über die erfassten Bolzeneigenschaften und/oder aus den erfassten Bolzeneigenschaften abgeleitete Informationen über eine Ausgabeeinrichtung ausgegeben.

In einem weiteren Schritt 507 wird der Schweissbolzen mit einem Schweissstrom zwischen dem Schweissbolzen und dem Untergrund beaufschlagt. In einem weiteren Schritt 508 wird der Schweissbolzen mittels einer Bolzenabhubeinrichtung von dem Untergrund unter Beibehaltung des zwischen dem Schweissbolzen und dem Untergrund fliessenden Schweissstroms abgehoben, wobei sich zwischen dem Schweissbolzen und dem Untergrund ein Lichtbogen ausbildet. In einem weiteren Schritt 509 wird, insbesondere aufgrund der von dem Lichtbogen erzeugten Hitze, ein Material des Schweissbolzens und/oder des Untergrunds teilweise verflüssigt. In einem weiteren Schritt 510 wird der Schweissbolzen mittels einer Bolzeneintaucheinrichtung in das verflüssigte Material des Schweissbolzens beziehungsweise des Untergrunds eingetaucht. In einem weiteren Schritt 511 werden ein oder mehrere Parameter des Schweissvorgangs gesteuert. In einem weiteren Schritt 512 werden mittels einer Detektionseinrichtung beim Schweissvorgang erzeugte Emissionen erfasst. In einem weiteren Schritt 513 werden ein oder mehrere Parameter des Schweissvorgangs bestimmt. In einem weiteren Schritt 514 erstarrt das verflüssigte Material des Schweissbolzens und/oder des Untergrunds, so dass der Schweissbolzen stoffschlüssig mit dem Untergrund verbunden ist. In einem weiteren Schritt 515 werden ein oder mehrere Parameter des Schweissvorgangs sowie eine Induktivität einer Spule oder eine die Induktivität der Spule repräsentierende Grösse mittels einer oder mehreren Erfassungseinrichtungen erfasst und gespeichert. Bevorzugt wird der Schweissbolzen mittels eines von der Spule erzeugten Magnetfelds zur Ausführung einer Abhubbewegung von dem Untergrund weg und/oder einer Eintauchbewegung auf den Untergrund zu angetrieben.

In einem weiteren Schritt 516 werden während eines aktuellen Schweissvorgangs von der einen oder mehreren Erfassungseinrichtungen erfasste Parameter mit in einem Datenspeicher gespeicherten Parametern oder Sollwerten verglichen und Unterschiede oder Differenzen zwischen den von der Erfassungseinrichtung während des aktuellen Schweissvorgangs erfassten Parametern und den in dem Datenspeicher gespeicherten Parametern und/oder aus solchen Unterschieden beziehungsweise Differenzen abgeleitete Informationen ausgegeben. In einem weiteren Schritt 516 werden ein oder mehrere Parameter eines nachfolgenden Schweissvorgangs in Abhängigkeit von den während eines vorangegangenen Schweissvorgangs erfassten Parametern gesteuert. In einem weiteren Schritt 517 werden über eine Ausgabeeinrichtung Informationen ausgegeben. In einem weiteren Schritt 518 wird von einem Anwender nach der Durchführung eines Schweissvorgangs eine Beurteilung einer Güte des Schweissvorgangs eingegeben. In einem weiteren Schritt 519 wird eine Eingabe des Anwenders dazu verwendet, eine Güte zukünftiger Schweissvorgänge zu beurteilen.

Die Erfindung wurde anhand von Beispielen einer Vorrichtung und eines Verfahrens zum Schweissen eines Schweissbolzens an einem Untergrund beschrieben. Die Merkmale der beschriebenen Ausführungsformen sind dabei auch beliebig miteinander innerhalb einer einzigen Schweissvorrichtung beziehungsweise eines einzigen Schweissverfahrens kombinierbar. Es wird darauf hingewiesen, dass die erfindungsgemässe Vorrichtung und das erfindungsgemässe Verfahren auch für andere Zwecke geeignet sind.

## Patentansprüche

1. Vorrichtung zum Schweissen eines Schweissbolzens an einen Untergrund, mit einem Bolzenhalter, einem Schweissstrom-Kontaktelement zur Beaufschlagung des Schweissbolzens mit einem Schweissstrom, um ein Material des Schweissbolzens und/oder des Untergrunds teilweise zu verflüssigen, einer eine Spule umfassenden Bolzentransporteinrichtung und mit einer Bestimmungseinrichtung zur Bestimmung einer zeitlichen Dauer und/oder Geschwindigkeit einer Bewegung des Schweissbolzens und/oder einer Position des Schweissbolzens, wobei die Bestimmungseinrichtung eine Erfassungseinrichtung zur Erfassung einer Induktivität der Spule oder einer die Induktivität der Spule repräsentierenden Grösse umfasst.

2. Vorrichtung nach Anspruch 1, wobei die Bolzentransporteinrichtung einen die Spule aufweisenden Hubmagneten umfasst, welcher den Schweissbolzen mittels eines von der Spule erzeugten Magnetfelds zur Ausführung einer Abhubbewegung von dem Untergrund weg und/oder einer Eintauchbewegung auf den Untergrund zu antreibt.

3. Vorrichtung nach einem der vorhergehenden Ansprüche, wobei die Bolzentransporteinrichtung eine Bolzenabhubeinrichtung zum Abheben des Schweissbolzens von dem Untergrund umfasst.

4. Vorrichtung nach einem der vorhergehenden Ansprüche, wobei die Bolzentransporteinrichtung eine Bolzeneintaucheinrichtung zum Eintauchen des Schweissbolzens in das verflüssigte Material des Schweissbolzens und/oder des Untergrundes, wenn der Schweissbolzen und/oder der Untergrund aufgrund des Schweissstroms teilweise verflüssigt ist, umfasst.

5. Vorrichtung nach einem der vorhergehenden Ansprüche, weiterhin umfassend eine Steuereinrichtung, welche insbesondere die Bestimmungseinrichtung umfasst.

6. Vorrichtung nach Anspruch 5, weiterhin umfassend einen Datenspeicher, in welchem ein Sollwert für die Induktivität der Spule oder der die Induktivität der Spule repräsentierenden Grösse abgelegt ist, wobei die Steuereinrichtung dazu geeignet ist, eine von der Erfassungseinrichtung erfasste Grösse mit dem Sollwert zu vergleichen und insbesondere eine Differenz daraus zu bilden.

7. Vorrichtung nach einem der Ansprüche 5 bis 6, wobei die Steuereinrichtung vorgesehen ist zum Steuern der Bolzentransporteinrichtung in Abhängigkeit von einer von der Erfassungseinrichtung erfassten Induktivität oder die Induktivität repräsentierenden Grösse.

8. Vorrichtung nach einem der Ansprüche 5 bis 7, wobei die Steuereinrichtung vorgesehen ist zum Steuern eines oder mehrerer Parameter des Schweissvorgangs in Abhängigkeit von den erfassten Grössen.

9. Vorrichtung nach Anspruch 8, wobei die Steuereinrichtung vorgesehen ist zum Steuern einer elektrischen Spannung und/oder einer Stromstärke des Schweissstroms, und/oder einer Geschwindigkeit und/oder einer Position und/oder einer Bewegungsrichtung des Schweissbolzens.

10. Verfahren zum Schweissen eines Schweissbolzens an einen Untergrund, mit den Schritten
a) Zur-Verfügung-Stellen eines Schweissbolzens,
b) Beaufschlagen des Schweissbolzens mit einem Schweissstrom zwischen dem Schweissbolzen und dem Untergrund,
c) teilweises Verflüssigen eines Materials des Schweissbolzens und/oder des Untergrunds,
d) Eintauchen des Schweissbolzens in das verflüssigte Material des Schweissbolzens beziehungsweise des Untergrunds vor dem Erstarren mit Hilfe einer eine Spule umfassenden Bolzentransporteinrichtung,
e) Bestimmen einer oder mehrerer die von der Bolzentransporteinrichtung bewirkte Eintauchbewegung des Schweissbolzens in das verflüssigte Material des Schweissbolzens und/oder des Untergrundes kennzeichnender Grössen, und
f) Erfassen einer Induktivität der Spule oder einer die Induktivität der Spule repräsentierenden Grösse.

11. Verfahren nach Anspruch 10, wobei die Bolzentransporteinrichtung einen die Spule umfassenden Hubmagneten umfasst, und wobei der Schweissbolzen mittels eines von der Spule erzeugten Magnetfelds zur Ausführung einer Abhubbewegung von dem Untergrund weg und/oder einer Eintauchbewegung auf den Untergrund zu angetrieben wird.

12. Verfahren nach einem der Ansprüche 10 bis 11, wobei eine von der Erfassungseinrichtung erfasste Grösse mit einem Sollwert für die Induktivität der Spule oder der die Induktivität der Spule repräsentierenden Grösse verglichen und insbesondere eine Differenz daraus gebildet wird.

13. Verfahren nach einem der Ansprüche 10 bis 12, wobei die Bolzentransporteinrichtung in Abhängigkeit von einer von der Erfassungseinrichtung erfassten Induktivität oder die Induktivität repräsentierenden Grösse gesteuert wird.

14. Verfahren nach einem der Ansprüche 10 bis 13, wobei ein oder mehrere Parameter des Schweissvorgangs in Abhängigkeit von den erfassten Grössen gesteuert werden.

15. Verfahren nach Anspruch 14, wobei eine elektrische Spannung und/oder eine Stromstärke des Schweissstroms, und/oder eine Geschwindigkeit und/oder eine Position und/oder eine Bewegungsrichtung des Schweissbolzens gesteuert wird.
